# EUROPÄISCHE PATENTSCHRIFT

(11) **EP 1 533 674 B1**
(45) Veröffentlichungstag und Bekanntmachung des Hinweises auf die Patenterteilung: **21.10.2009**
(21) Anmeldenummer: 04027581.0
(22) Anmeldetag: 19.11.2004
(51) Int. Cl.: G05B 19/418

(54) **Verfahren zur Entwicklung und Implementierung eines Modells zur formalen Beschreibung eines sich aus mehreren verteilten Komponenten zusammensetzenden kollaborativen Systems, insbesondere eines intelligenten flexiblen Produktions-und/oder Prozessautomatisierungssystems**
Method for developing and implementing a model to formally describe a collaborative system comprising a plurality of distributed components, particularly an intelligent flexible production and/or process automation system
Méthode pour développer et implémenter un modèle décrivant formellement un système collaboratif comportant une pluralité de composants distribués, en particulier un système intelligent et flexible de production et/ou d'automatisation de processus

(30) Priorität: 19.11.2003 DE 10354146
(43) Veröffentlichungstag der Anmeldung: 25.05.2005
(73) Patentinhaber: Schneider Electric Automation GmbH, 63500 Seligenstadt (DE)
(72) Erfinder: Colombo, Armando Walter, 63791 Karlstein a. M. (DE); Schoop, Ronald, 63512 Hainburg (DE)
(74) Vertreter: Stoffregen, Hans-Herbert

(56) Entgegenhaltungen:
- DE-A1- 10 224 650
- US-B1- 6 256 598
- COLOMBO A W ET AL INSTITUTE OF ELECTRICAL AND ELECTRONICS ENGINEERS: "A coloured petri net-based approach towards a formal specification of agent-controlled production systems" IEEE 2002 INTERNATIONAL CONFERENCE ON SYSTEMS, MAN AND CYBERNETICS. (SMC'02). YASMINE HAMMAMET, TUNESIA, OCT. 6 - 9, 2002, IEEE INTERNATIONAL CONFERENCE ON SYSTEMS, MAN, AND CYBERNETICS, NEW YORK, NY : IEEE, US, Bd. VOL. 7 OF 7, 6. Oktober 2002 (2002-10-06), Seiten 230-235, XP010625617 ISBN: 0-7803-7437-1
- DIANXIANG XU ET AL: "Modeling mobile agent systems with high level petri nets" SYSTEMS, MAN, AND CYBERNETICS, 2000 IEEE INTERNATIONAL CONFERENCE ON NASHVILLE, TN, USA 8-11 OCT. 2000, PISCATAWAY, NJ, USA,IEEE, US, Bd. 5, 8. Oktober 2000 (2000-10-08), Seiten 3177-3182, XP010524042 ISBN: 0-7803-6583-6

## Beschreibung

Die Erfindung bezieht sich auf ein Verfahren zur Entwicklung und Implementierung eines Modells zur formalen Beschreibung eines sich aus mehreren verteilten Komponenten zusammensetzenden kollaborativen Systems nach dem Oberbegriff des Anspruchs 1.

Neuere Produktionstechnologien zeigen einen weltweiten Trend sowohl in Richtung kleinerer und mittlerer Losgrößen als auch zu Produktfamilien größerer Vielfalt. Diese Tendenz steht häufig im Widerspruch zu der Forderung nach besserer Produktivität im Sinne einer Reduzierung der Produktionszeit und gleichzeitiger Steigerung der Auslastung von Maschinen.

Aus dem Stand der Technik sind industrielle flexible Produktionssysteme bekannt, die die Fähigkeit besitzen, eine breite Palette unterschiedlicher Produktfamilien bzw. unterschiedliche Produkttypen effizient und mit minimalen Änderungen ihrer Produktionsumgebung zu erreichen. Derartige Flexibilitätskonzepte erfordern jedoch komplexe Entwurfsmethoden und Steuerungssysteme, da der Grad der Flexibilität der Gesamtsysteme nicht nur von der Flexibilität der einzelnen Komponenten des Produktionssystems abhängt, sondern in viel stärkerem Umfang von dem zu Grunde liegenden Automatisierungssystem und z. B. dessen Intelligenz, dessen Architektur, dessen Schnittstellen und dessen Verteilung im Gesamtsystem.

Zwischen einem Produktionssystem und dem zugehörigen Steuerungssystem existieren Wechselwirkungen und komplizierte Verbindungen bezüglich deren Struktur und Verhalten.

Hinsichtlich der Methoden und Verfahren, die sich auf die Kostensenkung und einen detaillierten Entwurfsprozess für ein industrielles flexibles Produktionssystem beziehen, besteht zur Zeit ein Mangel.

In dem Aufsatz von Süssmann, B., u.a.: Configuration of agent-oriented manufacturing systems using a petri net-based simulation approach. In: Simulation in Industry 2001. 13th ESS' 2001. SCS Europe Bvba, 18.-20. Okt.2001, S. 929-933), wird ein Verfahren zur Konfiguration eines agentenbasierten Fertigungssystems unter Verwendung eines auf Petri-Netz-Simulation basierenden Ansatzes beschrieben. Dabei werden Petri-Netz-Modelle von Hardware-Komponenten des Fertigungssystems zu einem sogenannten Koordinations-Steuerungsmodell zusammengefügt. Aus dem Koordinations-Steuerungsmodell werden sodann durch Analyse mittels diskreter ereignisorientierter Simulationsverfahren Informationen zur Beschreibung des Systems und zur Optimierung sowohl des Anlagen-Layouts als auch des Fertigungsverfahrens abgeleitet.

Gleichzeitig bildet das Koordinations-Steuerungsmodell ein Skelett für eine diskretereignisorientierte Steuerungsstruktur, aus der Informationen für die Steuerung ableitbar sind.

Schließlich wird ein Ansatz zur Verbindung der auf Petri-Netzen basierenden Simulation der Hardware eines Produktions- bzw. Fertigungssystems mit agentenorientierten Fertigungssteuerungstechnik beschrieben. Bei dieser Verfahrensweise wird ebenfalls zunächst ein Koordinations-Steuerungsmodell aus den Modellen der einzelnen Hardware-Komponenten des vorgegebenen Fertigungssystems erzeugt. Daraus wird sodann eine Multiagenten-Steuerungs-Plattform für das Fertigungssystem erzeugt. Aus diesem Gesamtsystem können agentenbezogene Entscheidungen abgeleitet werden und Interaktionsmuster zwischen Agenten zur Steuerung des Fertigungsverfahrens entworfen werden. Eine Analyse erfolgt mittels Simulationsverfahren.

In einem Aufsatz von A.W. Colombo, "Integration of High-Level Petri Net-based Formal Methods for the Supervision of Flexible Production Systems" , Tutorial Lecture at the 1st Online Symposium of Electronics Engineers, 2001, wird auf Werkzeuge und Methoden für das Design, den Test und die Implementierung eines flexiblen Produktionssystems hingewiesen, wobei jedoch zu beachten ist, dass sich diese Werkzeuge und Methoden von denen für das Design, den Test und die Implementierung der zugehörigen Steuerung unterscheiden.

Die zuvor beschriebenen Ansätze eignen sich lediglich dazu, bereits bekannte, d. h. in ihrem Layout und ihren Hardware-Komponenten bekannte Fertigungssysteme zu modellieren und zu beschreiben und gegebenenfalls Software-Strukturen in einem zweiten Schritt abzuleiten.

Die Aufsätze von K. Feldmann, A.W. Colombo, u. a. "Specification Design and Implementation of Logic Controllers Based on Colored Petri Net Models and the Standard IEC 1131 Part II: Specification and Design" (IEEE, Nov. 1999, VOL 7, S. 657-665) sowie K. Feldmann, A.W. Colombo, u. a. "Specification, Design and Implementation of Logic Controllers Based on Colored Petri Net Models and the Standard IEC 1131 part II: Design and Implementation" (IEEE Nov. 1999, VOL. 7, S. 666 - 674), beschäftigen sich mit der Beschreibung und dem Design sowie der Implementierung von Regelsystemen auf der Basis von kolorierten Petri- Netzen. Ein weiterer Aufsatz von A. W. Co lombo u. R. Carelli "Petri Nets for Determining Manufacuring Systems" aus Sypros G. Tzafestas "Computer-Assisted Management And Control ofManufacturing Systems", Springer Verlag, dessen Inhalt in diese Anmeldung aufgenommen wird, bezieht sich auf den Einsatz von Petri-Netzen zur Simulation von Produktionssystemen. Ein Bezug zu multi-agentenbasierten Steuerungssystemen wird in den Aufsätzen nicht angesprochen.

Ohne eine geeignete Steuerungssoftware ist ein Produktionssystem nutzlos. Gerade die Steuerungssoftware organisiert die Produktion, plant und synchronisiert die Bereitstellung von Ressourcen. Zudem wird die Zuverlässigkeit und der Flexibilitätsgrad des Produktionssystems nicht nur durch die Zuverlässigkeit und Flexibilität der mechatronischen Komponenten wie Arbeitsstation, Lager, Handhabungs- und Transportsysteme usw. bestimmt, sondern ebenfalls in erheblichem Maße von der Zuverlässigkeit und Flexibilität des Steuerungssystems. Aufgrund der enormen Interaktionen zwischen den unterschiedlichen Komponenten des Produktionssystems und der Vielfalt der ausgeführten Funktionen wird ein Steuerungssystem eines intelligenten Produktionssystems nach heutigem Stand der Technik getrennt von diesem aufgebaut und realisiert.

Insbesondere wird die Implementierung eines agentenbasierten Steuerungssystems nach dem Stand der Technik manuell durchgeführt. Hierbei handelt es sich um einen interaktiven Prozess, der meist mehrere Schritte umfasst. Zudem kann Korrektheit bzw. Fehlerfreiheit des Designs erst dann bestätigt werden, wenn die Implemeritierung des flexiblen Produktionssystems abgeschlossen ist. Aufgrund der Erstellung der Steuerungssoftware getrennt von dem Design und der Implementierung des zu steuernden Produktionssystems nimmt der gesamte Prozess viel Zeit in Anspruch, führt leicht zu Missverständnissen und Fehlern und ist folglich meist sehr kostenintensiv.

Aus der Deutschen Patentanmeldung 102 24 650 ist ein Verfahren bekannt, bei dem mittels eines diskreten ereignisorientierten formalen Simulationsverfahrens, vorzugsweise auf der Basis von High-Level-Petri-Netzen, im Folgenden HLP-Netze und/oder erweiterten kolorierten Petri-Netzen, im Folgenden KOLP-Netze genannt, der gesamte Entwicklungsprozess eines industriellen flexiblen Produktionssystems und dessen auf Multiagenten basierten Steuerungssystems von der Anforderungsanalyse über die Modellierung bis zur Validierung unterstützt wird. Derartige Verfahren sind in der Lage, Modelle mit der Realität zu verbinden, d. h. beispielsweise Sensorsignale zu verarbeiten, die bei der Simulation verwendet werden.

Dabei erfolgt eine Integration von Modellierung und Validierung des flexiblen Produktionssystemes und dessen multi-agentenbasierten Steuerungssystems innerhalb einer einzigen Design-Phase.

HLP-Netze als formale Methode zum Erstellen von Modellen eines industriellen flexiblen Produktionssystems zeichnen sich insbesondere dadurch aus, dass die durch diese Methode erzeugten Modelle direkt in Modelle einer multi-agentenbasierten Steuerungslogik transformiert und anschließend implementiert werden können. Zudem ist garantiert, dass der Anspruch auf Anwendbarkeit und Flexibilität des ganzen Systems befriedigt wird.

Ausgehend von einer vorgegebenen Hardware- und Softwarekonfiguration eines industriellen flexiblen Produktionssystems und basierend auf den Informationen über die Aufgaben und Funktionen, die in dem System realisiert werden müssen, wird folgende bevorzugte Verfahrensweise vorgeschlagen:
- Erzeugen eines Simulationsmodells, vorzugsweise auf Basis von HLP-Netzen für jede Komponente des flexiblen Produktionssystems unter Berücksichtigung von ablaufbasierten Spezifikationen,
- Erzeugen eines Simulationsmodells von Schnittstellen wie Kommunikationsschnittstellen und/oder Sensor-Aktor-Schnittstellen jeder Komponente innerhalb einer aus dem Simulationsmodell abgeleiteten logischen Steuerungsstruktur unter Berücksichtigung von mechatronischen Spezifikationen,
- Validierung der Spezifikationen jeder modellierten Komponente und der dazugehörigen Steuerungsstruktur,
- Erzeugen eines Koordinationsmodells der Komponenten bzw. der Agenten ausgehend von den Spezifikationen eines Layouts des flexiblen Produktionssystems vorzugsweise unter Berücksichtigung sowohl eines Konkurrenz- als auch eines Kooperations-Verhaltens zwischen den Komponenten, wobei das Koordinationsmodell als Grundlage der multi-agentenbasierten Steuerungsstruktur des flexiblen Produktionssystems dient.

Aus der Validierung von strukturellen und dynamischen Spezifikationen der multi-agentenbasierten Steuerungsstruktur bzw. des Layouts des flexiblen Produktionssystems sowie des Verhaltens des flexiblen Produktionssystems ergeben sich Informationen insbesondere über Ablaufstrategien, Konflikte, autonome und/oder kooperative Entscheidungsprozesse, Koordination, Konkurrenz, Produktspezifikation und/oder Steuerungsbefehle u. a., die in dem System auftreten können. Anschließend folgt die Erzeugung, der Test und die Optimierung von Spezifikationen für die multi-agentenbasierte Steuerungsstruktur und der zugehörigen Ablaufsteuerungsstrategie für das zu steuernde flexible Produktionssystem.

Zu dem Verfahrensschritt, in dem ein Koordinationsmodell der Komponenten und/oder der Agenten ausgehend von den Spezifikationen des Layouts des flexiblen Produktionssystems erzeugt wird, ist anzumerken, dass hierbei eine Agentifizierung eines flexiblen Produktionssystems aus dem HLP-Netz - Simulationsmodell durchgängig abgeleitet wird. Das Koordinationsmodell dient als Grundlage der multi-agentenbasierten Steuerungsstruktur des flexiblen Produktionssystems.

Jedes Simulationsmodell beinhaltet strukturelle und dynamische Eigenschaften der modellierten Produktionskomponenten. Wenn das Koordinationsmodell aus den einzelnen Modellen generiert wird, werden sowohl physische als auch logische Interaktionen zwischen den Produktionskomponenten betrachtet. Vom Gesichtspunkt des Produktionssystems ist das Koordinationsmodell eine Abbildung der Hardware (Produktionsanlage). Vom Gesichtspunkt des Steuerungssystems ist das Koordinationsmodell eine Abbildung des Steuerungssystems (Topologie + Intelligenz).

Die physischen Interaktionen werden in der Implementierungsphase des multi-agentenbasierten Steuerungssystems mit dem zukünftigen Austausch von mechatronischen Signalen zwischen dem Steuerungssystem und dem Produktionssystem gekennzeichnet.

Die logischen Interaktionen beziehen sich vorwiegend auf Produktionsspezifikationen bzw. Produktionsstrategien, welche das multi-agentenbasierte Steuerungssystem steuern und überwachen muss. Die Qualität der Steuerungs- und Überwachungsaktivitäten werden dadurch gekennzeichnet, wieviel Intelligenz das Steuerungssystem hat (Intelligenz im Sinne von optimalen und/oder pseudooptimalen Entscheidungen für die Lösung von Konflikten). Die HLP-Netz-basierenden Simulationsmodelle repräsentieren ein Skelett des multi-agentenbasierten Steuerungssystems und sie sind in der Lage, die Konflikte zu identifizieren, die notwendige Produktions- und Steuerungsinformationen für den Entscheidungsprozess zur Verfügung zu stellen und insbesondere die Ergebnisse der Lösung von Konflikten zu validieren bzw. optimieren. Daraus folgt, dass das Simulationsmodell nicht nur die multi-agentenbasierte Steuerungsstruktur repräsentiert, sondern dass es auch den Entwurf bzw. die Optimierung des Verhaltens dieser mulitagentenbasierten Struktur erlaubt, was als besonderer Vorteil des erfindungsgemäßen Verfahrens hervorzuheben ist.

Der zuvor dargestellte Ansatz beschreibt ein formales Verfahren zur Modellierung und Validierung von agentenbasierten Steuerungssystemen für flexible Produktionssysteme unter Verwendung von HLP-Netzmodellen. Damit wird eine erste Identifikation von funktionellen intelligenten Einheiten möglich, das heißt von Hardware- und Softwareeinheiten als intelligente Elemente in einem verteilten netzwerkbasierten Produktionssystem. Die Einheiten können über ihren Lebenszyklus und in ihren verschiedenen Hierarchie-Leveln, das heißt von einem einzelnen Element in der gesamten Anordnung bis zum gesamten Produktionssystem identifiziert werden. Die Stellung der Einheiten (Hierarchie-Level) und deren Verteilung innerhalb des Gesamtsystems wird als Heterarchie bezeichnet. Ein verteiltes und hierarchisches System kann somit als heterarchisches System definiert werden.

Der vorliegenden Erfindung liegt das Problem zu Grunde, ein Verfahren der zuvor genannten Art dahingehend weiterzubilden, dass die Entwicklung und Implementierung eines Modells zur formalen Beschreibung eines mehrere verteilte Komponenten aufweisenden kollaborativen Systems vereinfacht wird.

Das Verfahren wird erfindungsgemäß durch die kennzeichnenden Merkmale des Anspruchs 1 gelöst.

Nach der Erfindung ist vorgesehen, dass ein Katalog von Modellen von standardisierten kollaborativen Einheiten, d. h. miteinander zusammenwirkenden Basismodulen des Systems erstellt wird und dass dem Katalog ein Satz von Regeln zur Spezifizierung von Interaktionen zwischen den Modellen der kollaborativen Einheiten und zur Konfiguration des Modells eines komplexen kollaborativen Systems zugeordnet ist. Der Satz von Regeln kann auch Bestandteil des Katalogs sein.

Ausgehend von dem in der Patentanmeldung 102 24 650 beschriebenen Verfahren kann mit nur einem Ansatz und mit der schrittweisen Verbesserung des HLP-Netzmodells der Komponenten die Steuerungsspezifikation einer kollaborativen Einheit und ein komplexes kollaboratives System, welches mit kollaborativen Einheiten aufgebaut ist, auf Anforderung in einem Durchgang generiert werden. Dies bedeutet jedoch, dass nicht zwei Kataloge existieren müssen, das heißt einer für die Mechanik und ein anderer für die Steuerung/Software, sondern es existiert nur ein Katalog. Die Modelle der kollaborativen Einheiten, die darin enthalten sind, können mit unterschiedlichen Feinheitsgraden, entsprechend den Bedürfnissen des Benutzers, verwendet werden.

Erfindungsgemäß werden die in dem Katalog enthaltenen Hardware-/Software-Komponenten sowie Intelligenz in Form von Kooperationsinformationen repräsentierenden Modelle mit einem Satz von Regeln zur Spezifikation von Interaktionen zwischen den kollaborativen Einheiten und zur Konfiguration von komplexen kollaborativen Systemen verknüpft. Basierend auf dem Ergebnis dieses Ansatzes folgt die Bereitstellung bzw. Definition von Regeln zur Modellierung von kollaborativen Systemen und die Bereitstellung bzw. Definition von Bewertungsparametern für jede Anwendung.

Eine bevorzugte Verfahrensweise sieht vor, dass die Modelle der kollaborativen Einheiten durch High-Level-Petri-Netze (HLPN) oder erweiterte kolorierte Petri-Netze (KOLPN) dargestellt werden. Eine Analyse der Modelle der kollaborativen Einheiten und/oder des zusammengesetzten Modells erfolgt mittels eines diskreten ereignisorientierten Simulationsverfahrens und/oder eines auf Funktionsanalyse (functional analysis) basierenden formalen Validierungs- und/oder Analyseverfahrens.

Es ist des Weiteren vorgesehen, dass Modelle kollaborativer Einheiten auf der Grundlage von Komponenten mit unterschiedlichem Feinheitsgrad wie beispielsweise eines Moduls einer Maschine, eines Maschinenteils, eines Sensors, eines Aktors oder einer Peripherie bereitgestellt werden. Auch der Mensch kann als kollaborative Einheit angesehen werden.

Des Weiteren ist gemäß einer bevorzugten Verfahrensweise vorgesehen, dass Modelle kollaborativer Einheiten auf der Basis wieder verwendbarer Komponenten bereitgestellt werden. Durch die Bereitstellung von Modellen kollaborativer Einheiten mit unterschiedlichem Feinheitsgrad sowie von wieder verwendbaren Komponenten wird eine erhebliche Vereinfachung bei der Synthese neuer Systeme erreicht.

Zur Katalogisierung ist des Weiteren vorgesehen, dass die Modelle der kollaborativen Einheiten ausgehend von standardisierten Hardware-Komponenten generiert werden. Dadurch besteht die Möglichkeit, einen Katalog von Modellen für unterschiedliche Produktions- und/oder Prozessszenarien zur Verfügung zu stellen.

Im Zusammenhang mit agentenbasierten Steuerungseinheiten besteht eine bevorzugte Verfahrensweise darin, vordefinierte Komponenten zu verwenden. Aufgrund des Ansatzes über HLP-Netzmodellen von Hardware-Komponenten dienen diese als Skelett von korrespondierenden agentenbasierten Steuerungseinheiten. In diese können sodann Hauptfunktionen wie Steuerung, Überwachung, Diagnose, Entscheidungsfindungsprozesse, präventive und/oder vorbeugende Instandhaltungs- und Wartungsmaßnahmen implementiert werden.

Weitere Einzelheiten, Vorteile und Merkmale der Erfindung ergeben sich nicht nur aus den Ansprüchen, den diesen zu entnehmenden Merkmalen- für sich und/oder in Kombination-, sondern auch aus dem der nachfolgenden Beschreibung zu entnehmenden Ausführungsbeispiel.

Es zeigen:
- Fig. 1: eine schematische Darstellung eines Verfahrens zur Entwicklung eines Koordinationsmodells und
- Fig. 2: eine schematische Darstellung eines Verfahrens zur Entwicklung und Implementierung eines kollaborativen Produktionsautomatisierungssystems.

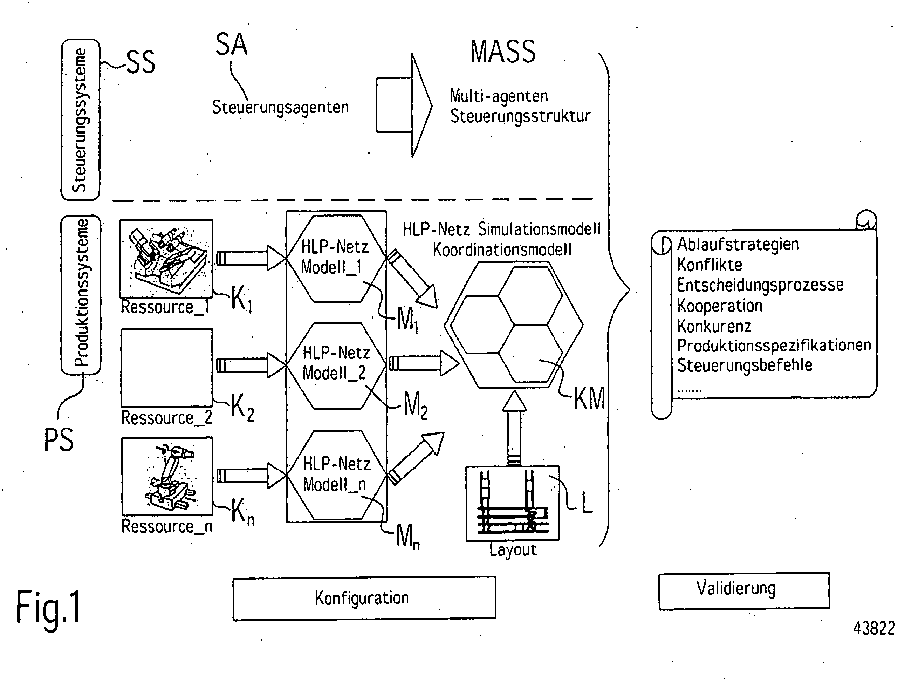

Die Figur 1 zeigt eine schematische Darstellung des Verfahrens. Zunächst werden für jede Komponente K1 ... KN eines flexiblen Produktionssystems PS auf der Basis von HLP-Netzen Simulationsmodelle M1 ... MN erzeugt, die zu einem HLP-Netz-Koordinationsmodell KM zusammengefasst werden, die letztendlich ein Layout L, d. h. den mechanischen Aufbau des flexiblen Produktionssystems repräsentieren. Mit anderen Worten wird ein HLP-Netzmodell aus den notwendigen Entscheidungen des Prozesses oder der Prozesssteuerung abgeleitet, um dem Entwickler die Möglichkeit zu eröffnen, unmittelbar von dem Produktionsbereich in den multi-agentenbasierten Entwicklungsbereich zu gelangen.

Schließlich werden Steuerungsagenten SA des Steuerungssystems SS aus dem HLP-Netz basierten Modell der Komponenten des Produktionssystems abgeleitet, d. h. es erfolgt ein Mapping aus dem Produktionsprozess und den Produktionsspezifikationen zu einem agentenorientierten Konzept durch Identifikation der Agenten und deren Fähigkeiten, wobei unter Fähigkeiten deren Autonomie und kollaboratives Verhalten zu verstehen ist.

Anschließend wird eine multi-agentenbasierte Steuerungsplattform für das Produktionssystem konfiguriert, unter Benutzung von Informationen des auf dem HLP-Netz basierten Koordinationsmodell KM des Produktionssystems. Es folgt die Identifikation von agentenbezogenen Entscheidungen und der Entwurf von Wechselwirkungen zwischen Agenten zur Steuerung (dynamische Planung) der Produktionsumgebung.

Auf dieser Grundlage kann eine qualitative Analyse und formale Validation von Struktur- und Verhaltensspezifikationen wie beispielsweise Ablaufstrategien, Konfliktsituationen, Entscheidungsprozessen, Kooperationen, Konkurrenz, Produktspezifikationen, Steuerungsbefehle usw. des agentenorientierten Produktionssystems unter Verwendung formaler Analyse-Methoden in Verbindung mit den mathematischen Grundlagen der HLP-Netz-basierten Simulationsmodelle durchgeführt werden. Anschließend erfolgt ein Mapping von Übergangs- und Ortsströmen des HLP-Netz-basierten Modells auf den Satz von verteilten Steuerungs- und Produktspezifikationen. Zuletzt erfolgt eine Validierung von strukturellen und dynamischen Spezifikationen der multi-agentenbasierten Steuerungsstruktur bzw. des Layouts und Verhaltens des flexiblen Produktionssystems unter Verwendung von Analyse-methoden in Verbindung mit den mathematischen Grundlagen der HLP-Netz-basierten Simulationsmodelle. Ferner erfolgt eine Validation der Leistungsspezifikationen der Produktionsumgebung, wenn diese durch das agentenbasierte Steuerungssystem festgelegt und überwacht wird.

Das Verfahren erzeugt einen Satz von qualitativen und quantitativen Kriterien, die auf die Agenten bezogen sind, um deren "soziales Verhalten", d. h. dessen Verhalten untereinander und deren zukünftige Interaktionen innerhalb der Produktionsumgebung zu verbessern.

Aufgrund der Erweiterbarkeit und des modularen Aufbaus weisen die entwickelten HLP-Netz-Simulationsmodelle eine Vielzahl von Vorteilen auf:
- Spezifikationen von Produktions- und agentenbasierten Steuerungssystemen können generiert und zusammen validiert werden,
- Projektierung und Validierung von flexiblen Produktionssystemen und multi-agentenbasierten Steuerungssystemen werden zusammen betrachtet und laufen simultan ab, wobei die Interaktionen zwischen den beiden Komponenten berücksichtigt werden,
- Korrektheit bzw. Fehlerfreiheit des Designs des Steuerungssystems kann bestätigt werden, bevor die Implementierung des flexiblen Produktionssystems abgeschlossen wird und
- die formale Abbildung des flexiblen Produktionssystems und des in ihm integrierten multi-agentenbasierten Steuerungssystems kann als eine Einheit betrachtet werden, die sowohl vom Produktionsingenieur als auch vom Entwickler angewandt werden kann, um z. B. Testfälle in beiden Bereichen (Produktion und Steuerung) zu generieren.

Die hier verwendete Bezeichnung HLP-Netz ist mit erweiterten kolorierten Petrinetzen (Colored Petri Net) aus der Informatik und Systemtheorie zu identifizieren. Dies bedeutet, dass die Struktur des Netzes mit zusätzlichen Daten und Funktionen vervollständigt wird und dass das dynamische Verhalten des Netzes auf der Grundlage der funktionalen Analyse formalisiert werden kann. Die Komponenten eines Modells werden als Objekte betrachtet, welche reale Komponenten eines Systems nachbilden (sowohl statisch als auch dynamisch): hier Produktions- bzw. Steuerungskomponenten und -agenten.

Im Gegensatz zu der aktuellen Lösung nach dem Stand der Technik kann das erfindungsgemäße Verfahren durch die Verwendung von durchgängigen, plattformunabhängigen, konfigurierbaren und für den realen Betrieb einsetzbaren HLP-Netz-Simulationsmodellen industrieller flexibler Produktionssysteme und deren multiagentenbasierten Steuerungsstrukturen ein erhebliches Einsparpotential an Zeit und Kosten erschließen.

Das erfindungsgemäße Verfahren erlaubt die Konzeption, Definition und formale Spezifikation eines "eingekapselten Verfahrens" ("encapsulation process") in vernetzten Systemen wie industriellen Produktionssystemen, wenn die Komponenten des Systems wie Mechanik, Steuerung und Intelligenz als in einer kollaborativen Einheit wie beispielsweise einer Automatisierungseinheit integriert angesehen werden. Aufgrund ihrer innewohnenden Fähigkeit zum autonomen Verhalten und insbesondere zur Kooperation und Zusammenarbeit mit anderen Einheiten, kann eine solche "Kapsel" ("capsule") auch als "kollaborative Einheit" bzw. "kollaborative Automationseinheit" (englisch: Collaborative Automation Unit (CAU)) bezeichnet werden.

Wie zuvor erwähnt, vereinfacht der auf HLP-Netz basierende Ansatz die Integration von drei Aspekten wie beispielsweise Mechanik, Steuerung und Intelligenz. Dabei werden die drei angesprochenen Aspekte in einer vereinheitlichten Weise entwickelt und implementiert.

Die Modelle der kollaborativen Einheiten können als Basismodule angesehen werden. Mit diesen Modulen kann ein komplettes Modell eines netzwerkbasierten Systems wie Automatisierungssystem konstruiert und formelmäßig spezifiziert werden. Dazu ist es erforderlich, einen Satz von Spezifikationen in Betracht zu ziehen, und zwar 1. die formale Architektur, 2. die auszuführenden Funktionen und 3. Verbindungen bzw. Kommunikationen zwischen den Modulen.

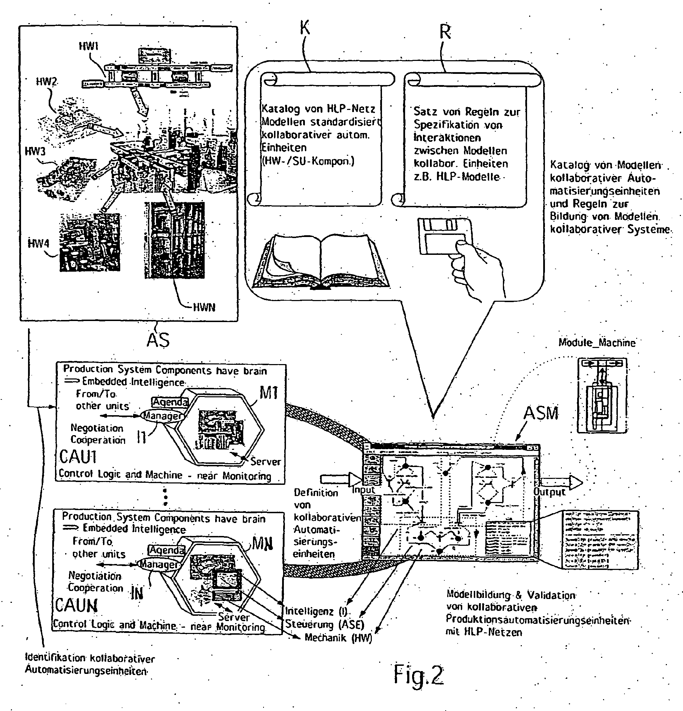

Fig. 2 zeigt eine schematische Darstellung eines Verfahrens zur Entwicklung und Implementierung eines Modells für ein kollaboratives Produktionsautomatisierungssystem. Ausgehend von einem realen Automatisierungssystem AS mit den Hardware-Komponenten HW1-HWN, welches beispielsweise wieder verwendbare Komponenten repräsentiert, erfolgt zunächst eine Identifikation von Modulen, das heißt kollaborativen

Einheiten CAU1-CAUN, welche die innewohnende Fähigkeit zum autonomen Verhalten und insbesondere zur Kooperation und Zusammenarbeit mit anderen Einheiten aufweisen. Hierzu sind besondere Schnittstellen I1, I2, bzw. S1, S2 vorgesehen. Die kollaborativen Einheiten CAU1 -CAUN beinhalten bereits aufgrund des Ansatzes über HLP-Netze die Integration von Hardware-Komponenten (Mechanik), Software-Komponenten (Steuerung) und Informationen 1 (Intelligenz) für deren Zusammenwirken. Aus den kollaborativen Einheiten CAU1-CAUN werden mittels HLP-Netz-Verfahren Modelle erzeugt, mit denen ein komplettes Modell eines netzwerkbasierten Automatisierungssystems ASM konstruiert und formelmäßig spezifiziert werden kann.

Gemäß der Erfindung ist vorgesehen, dass eine Identifikation von Basismodulen, das heißt kollaborativen Einheiten CAU1, CAU2, in unterschiedlichem Feinheitsgrad erfolgt, was bedeutet, dass eine kollaborative Einheit beispielsweise eine Maschine, ein Maschinenteil, ein Sensor, ein Aktor oder Peripheriegeräte repräsentieren kann. Eine Vereinfachung erfolgt insoweit, dass wieder verwendbare Basismodule herausgearbeitet werden, wie zum Beispiel Hardware-Komponenten, die sodann von HLP-Netzmodellen repräsentiert werden. Die so festgelegten Basismodule von HW-Komponenten sollen durch standardisierte HLP-Netzmodelle repräsentiert werden. Erfindungsgemäß kann damit ein Katalog K von Modellen M1-MN für unterschiedliche Produktionsszenarien erzeugt werden. Ferner ist es von Vorteil, die Komponenten-Modelle M1- MN zu standardisieren.

Betreffend die agentenbasierten Steuerungseinheiten ist anzumerken, dass jedes HLP-Netzmodell einer Hardware-Komponente HW1-HWN als Skelett einer korrespondierenden agentenbasierten Steuerungseinheit ASE1-ASEN angesehen wird, die Bestandteil der kollaborativen Eiheiten CAU1-CAUN ist. In diesen Steuerungseinheiten sind bereits Hauptfunktionen wie Steuerung, Überwachung, Diagnose, Entscheidungsfindungsprozesse, vorhersehende und korrigierende Instandhaltungsmaßnahmen enthalten. Die Quantität und Qualität der in der Struktur des HLP-Netzmodells der agentenbasierten Steuerungseinheiten ASE1-ASEN enthaltenen Informationen unterstüzen die oben genannten Überwachsungsfunktionen. Die Ergebnisse der formalen Analyse der Modelle M1- MN vervollständigen den Satz von Informationsparametern, das heißt der Intelligenz I, die benötigt werden, um die kollaborative Automatisierungseinheit CAU1-CAUN zu unterstützen.

Die SW-Komponenten, d. h. die agentenbasierten Steuerungseinheiten ASE, werden aus den HLP-Netzmodellen der Hardware-Komponenten HW1-HWN abgeleitet und sind in dem Katalog K enthalten. Der Katalog K enthält Modelle von verschiedenen HW/SW-Komponenten sowie Informationen für unterschiedliche Produktionsszenarien.

Folglich können mit nur einem Ansatz und mit der schrittweisen Verbesserung des HLP-Netzmodells der HW-Komponenten die Steuerungsspezifikation einer kollaborativen Einheit CAU1-CAUN automatisch generiert werden. Dies bedeutet, dass nicht zwei Kataloge K existieren, sondern nur ein Katalog K. Die Modelle M1-MN der kollaborativen Einheiten CAU1-CAUN, die in dem Katalog K enthalten sind, können mit unterschiedlichen Feinheitsgraden, entsprechend der Bedürfnisse des Benutzers verwendet werden.

Der Katalog K der Modelle enthält die Ergebnisse der formalen Validation der Spezifikationen, strukturell als auch betreffend deren Verhalten, wenn HW- und/oder SW-Komponenten HW, ASE und deren zugehörige Intelligenz 1 komplett in jedem Modell M1-MN integriert sind.

Basierend auf dem Ergebnis des oben genannten Ansatzes folgt sodann die Definition bzw. Bereitstellung von Regeln R zur Modellierung des Modells ASM des kollaborativen Systems sowie die Definition bzw. Bereitstellung von Bewertungsparametern für jede Anwendung.

Bei der Katalogisierung ist zu beachten, dass beides, sowohl die Kompetenz als auch die Kooperation, das heißt Beziehungen zwischen den kollaborativen Einheiten CAU1-CAUN sowie Beschränkungen und Regeln für die Zusammensetzung von HL-PNbasierenden Modellen der kollaborativen Einheiten CAU1-CAUN als Ergebnis festzuhalten sind. Beispielsweise werden Regeln zur Beachtung sequenzieller bzw. paralleler und wechselseitiger Ausschlussbeziehungen und Teil-Resourcenfunktionen usw. generiert.

Das Ergebnis der Zusammensetzung von Produktions- und/oder Prozesskomponenten wurde zuvor als Koordinationsmodell KM bezeichnet. Der Satz von Regeln, der dem Katalog K gemäß der Erfindung zugeordnet oder in diesem oder einem Katalogabschnitt enthalten ist, erlaubt nunmehr die Verbesserung der Struktur und des Verhaltens des Modells ASM zur Verwendung als Formalspezifikation eines vollständigen kollaborativen Automatisierungsszenarios.

Zusammenfassend ist zu erwähnen, dass dadurch eine automatische Systemadaption möglich ist. Das Modell ASM ist imstande, Entscheidungen auf Systemlevel zu treffen, unterstützend eine der Hauptfunktionalitäten eines kollaborativen Automatierungssystems, wie Kollaboration bzw. Kooperation, z. B. die Fähigkeit Einfügung neuer Hardware, d. h. neue Modelle in den Katalog, der Abbruch von Komponenten und deren Ersatz, neue Produktionsspezifikationen für neue Produkte, neue Entscheidungen und/oder neue Faktoren zur Entscheidungsfindung.

Aufgrund der in dem System eingebauten Intelligenz ist das System in der Lage, z. B. für ausgefallene Anteile oder für Anteile, die zukünftig gewartet werden sollen, Ersatz zu bestellen. Auch können Erweiterungen selbständig bestellt werden, wenn neue Anforderungen durch den Prozess benötigt werden.

Es ist im Sinne der Erfindung, dass der zuvor verwendete Begriff "Komponente" auch als "Funktion" interpretiert wird. Das erfindungsgemäße Verfahren ermöglicht es, ein intelligentes System wie beispielsweise ein intelligentes flexibles Automatisierungssystem aus einzelnen zuvor beschriebenen, d. h. zuvor definierten Funktionen wie beispielsweise mechanische Funktionalität, Software-Funktionalität und Dialogfähigkeit zusammenzusetzen. Die intelligenten Systeme können beispielhaft sowohl in der Fertigung als auch in Prozessbereichen wie beispielsweise chemischen Prozessen eingesetzt werden. Durch die umfassend komplette Beschreibung aller oben genannten Funktionen der Einzelbausteine des Systems wird das System in einem Durchgang nach Art einer Compilierung erstellt.

Erfindungsgemäß sind Regeln vorgesehen, die aufgrund der Beschreibung der einzelnen Funktionen, d. h. der Beschreibung mechanischer Funktionalität, Software-Funktionalität und Dialogfähigkeiten, es erlauben, ein System in einem Durchgang zu erstellen.

Die Beschreibung der Modelle durch HLPN ist dabei besonders geeignet, da eine Vielzahl von Informationen auf der Grundlage von komplexen Funktionen beschreibbar sind, was im Gegensatz dazu bei der Verwendung von üblichen Petri-Netzen nicht möglich wäre.

## Patentansprüche

1. Verfahren zur Entwicklung und Implementierung eines Modells (ASM) zur formalen Beschreibung eines sich aus mehreren verteilten Komponenten (HW1-HWN) zusammensetzenden kollaborativen Systems (AS), wobei durch Simulationsverfahren analysierbare Modelle der Komponenten (HW1-HWN) erstellt werden,
**dadurch gekennzeichnet,**
**dass** das Verfahren die weiteren Verfahrensschritte umfasst:
- Erstellen von durch Simulationsverfahren analysierbaren Modellen (M1-MN) von kollaborativen Einheiten (CAU1-CAUN) als autonome Basismodule auf der Grundlage der Modelle der Komponenten, wobei ein Modell (M1-MN) einer kollaborativen Einheit (CAU1-CAUN) zusätzlich zu deren Hardware-Komponente (HW1-HWN) auch deren Software-Komponente (ASE1-ASEN) sowie deren Intelligenz (I1-IN) in Form von Informationen für deren autonomes Verhalten in Bezug auf Kooperation mit weiteren Modellen (M1-MN) kollaborativer Einheiten (CAU1-CAUN) beinhaltet,
- Bereitstellen eines Katalogs (K) von Modellen (M1-MN) der kollaborativen Einheiten (CAU1, CAUN), wobei der Katalog (K) der Modelle (M1-MNN) Ergebnisse einer formalen Validation der strukturellen und/oder verhaltensmäßigen Spezifikationen der kollaborativen Einheiten (CAU1-CAUN) enthält,
- Zuordnen eines Satzes von Regeln (R) zu dem Katalog (K) zur Spezifizierung von Interaktionen zwischen den autonomen Modellen (M1-MN) der kollaborativen Einheiten (CAU1-CAUN) sowie zur Entwicklung des Modells (ASM) des komplexen kollaborativen Systems (AS),
- Zusammensetzen des gewünschten Modells (ASM) unter Verwendung ausgewählter Modelle (M1-MN) der kollaborativen Einheiten als Basismodule aus dem Katalog (K) und unter Berücksichtigung von ausgewählten Regeln (R),
- automatische Adaption des Modells (ASM) durch Ableiten neuer Regeln (R) unter Berücksichtigung von Bewertungsparametem für jeden Anwendungsfall in einem Durchgang.

2. Verfahren nach Anspruch 1,
**dadurch gekennzeichnet,**
**dass** die Modelle der kollaborativen Einheiten (CAU1-CAUN) auf der Basis von High-Level-Petri-Netzen (HLPN) oder erweiterten kolorierten Petri-Netzen (KOLPN) dargestellt werden.

3. Verfahren nach Anspruch 1 oder 2,
**dadurch gekennzeichnet,**
**dass** Modelle (M1-MN) von kollaborativen Einheiten (CAU1-CAUN) auf der Grundlage von Komponenten (HW1-HWN) mit unterschiedlichem Feinheitsgrad wie beispielsweise eines Moduls einer Maschine, eines Maschinenteils, eines Sensors, eines Aktors oder einer Peripherie, bereitgestellt werden.

4. Verfahren nach zumindest einem der vorhergehenden Ansprüche,
**dadurch gekennzeichnet,**
**dass** Modelle (M1-MN) kollaborativer Einheiten (CAU1-CAUN) auf der Grundlage wiederverwendbarer Komponenten (HW1-HWN) bereitgestellt werden.

5. Verfahren nach zumindest einem der vorhergehenden Ansprüche,
**dadurch gekennzeichnet,**
**dass** als Simulationsverfahren ein diskretes ereignisorientiertes Simulationsverfahren und/oder ein auf Funktionsanalyse (functional analysis) basierendes Validierungs- und/oder Analyseverfahren verwendet wird.

6. Verfahren nach zumindest einem der vorhergehenden Ansprüche,
**dadurch gekennzeichnet,**
**dass** der Katalog (K) standardisierte Modelle (M1-MN) kollaborativer Einheiten (CAU1-CAUN) enthält.

7. Verfahren nach zumindest einem der vorhergehenden Ansprüche,
**dadurch gekennzeichnet,**
**dass** der Katalog (K) Modelle (M1-MN) kollaborative Einheiten (CAU1-CAUN) für unterschiedliche Produktszenarien enthält.

8. Verfahren nach zumindest einem der vorhergehenden Ansprüche,
**dadurch gekennzeichnet,**
**dass** in der aus den Modellen (M1-MN) der kollaborativen Einheiten (CAU1-CAUN) abgeleiteten agentenbasierten Software-Einheit (ASE1-ASEN) Hauptfunktionen wie Steuerung, Überwachung, Diagnose, Entscheidungsfindungsprozesse, vorhersehende und korrigierende Instandhaltung implementiert sind.

## Claims

1. Method for developing and implementing a model (ASM) for the formal description of a collaborative system (AS) comprised of multiple, distributed components (HW1-HWN), wherein analyzable models of the components (HW1-HWN) are generated via simulation processes,
**characterized in**
**that** the method comprises the further method steps:
- Generation of models (M1-MN) of collaborative units (CAU1-CAUN), which can be analyzed via simulation processes, as autonomous basic modules based upon the models of the components, wherein a model (M1-MN) of a collaborative unit (CAU1-CAUN) contains, in addition to the unit's hardware component (HW1-HWN), also its software component (ASE1-ASEN) and its intelligence (I1-IN) in the form of information for its autonomous behaviour with respect to cooperation with other models (M1-MN) of collaborative units (CAU1-CAUN),
- Preparation of a catalog (K) of models (M1-MN) of the collaborative units (CAU1-CAUN), wherein the catalog (K) of the models (M1-MNN) contains the results of a formal validation of the structural and/or behavioral specifications of the collaborative units (CAU1-CAUN),
- Assignment of a set of rules (R) to the catalog (K) for the specification of interactions among the autonomous models (M1-MN) of the collaborative units (CAU1-CAUN) and for the development of the model (ASM) of the complex collaborative system (AS),
- Generation of the desired model (ASM) using selected models (M1-MN) of the collaborative units as the basic module from the catalog (K), and taking selected rules (R) into account,
- Automatic adaptation of the model (ASM) by deriving new rules (R), taking into account evaluation parameters for each application in one process operation.

2. Method according to claim 1,
**characterized in**
**that** the models of the collaborative units (CAU1-CAUN) are constituted on the basis of high-level Petri nets (HLPN) or expanded colored Petri nets (KOPLN).

3. Method according to claim 1 or 2,
**characterized in**
**that** models (M1-MN) of collaborative units (CAU1-CAUN) are provided on the basis of components (HW1-HWN) having varying levels of precision, for example a module of a machine, a machine component, a sensor, an actuator, or a peripheral system.

4. Method according to at least one of the preceding claims,
**characterized in**
**that** models (M1-MN) of collaborative units (CAU1-CAUN) are provided on the basis of reusable components (HW1-HWN).

5. Method according to at least one of the preceding claims,
**characterized in**
**that** a discrete, event-oriented simulation process and/or a validation and/or analytical process based upon functional analysis are used as simulation process.

6. Method according to at least one of the preceding claims,
**characterized in**
**that** the catalog (K) contains standardized models (M1-MN) of collaborative units (CAU1-CAUN).

7. Method according to at least one of the preceding claims,
**characterized in**
**that** the catalog (K) contains models (M1-MN) of collaborative units (CAU1-CAUN) for different product scenarios.

8. Method according to at least one of the preceding claims,
**characterized in**
**that** in the agent-based software unit (ASE1-ASEN) derived from the models (M1-MN) of the collaborative units (CAU1-CAUN), primary functions such as control, monitoring, diagnostics, decision-making processes, preventive and corrective maintenance are implemented.

## Revendications

1. Procédé pour développer et aimanter un modèle (ASM) de description formelle d'un système collaborant (AS) composé de plusieurs composants répartis (HW1-HWN),
selon lequel, par des procédés de simulation, on établit des modèles de composants (HW1-HWN) susceptibles d'être analysés,
**caractérisé en ce que**
le procédé comprend les étapes de procédé suivantes :
- établissement par procédé de simulation de modèles analysables (M1-MN) d'unités en collaboration (CAU1-CAUN) comme modules de base autonomes, sur le fondement des modèles de composants,
- un modèle (M1-MN) d'une unité en collaboration (CAU1-CAUN) comportant également en plus de ces composants de circuit (HW1-HWN), leurs composants de programme (ASE1-ASEN) ainsi que leur intelligence (I1-IN) sous la forme d'informations pour leur comportement autonome par rapport à la coopération avec d'autres modèles (M1-MN) d'unités de coopération (CAU1-CAUN) ;
- fourniture d'un catalogue (K) de modèles (M1-MN) d'unités en coopération (CAU1-CAUN), le catalogue (K) des modèles (M1-MN) contenant des résultats d'une validation formelle des spécifications de structure et/ou de comportement des unités en collaboration (CAU1-CAUN) ;
- association d'un jeu de règles (R) au catalogue (K) pour spécifier les interactions entre les modèles autonomes (M1-MN) des unités en collaboration (CAU1-CAUN) et développement du modèle (ASM) du système de collaboration complexe (AS) ;
- assemblage du modèle souhaité (ASM) en utilisant des modèles sélectionnés (M1-MN) des unités en collaboration comme modules de base à partir du catalogue (K) et en tenant compte de règles sélectionnées (R)
- adaptation automatique du modèle (ASM) en déduisant de nouvelles règles (R) tenant compte de paramètres d'évaluation pour chaque cas d'application au cours d'un passage.

2. Procédé selon la revendication 1,
**caractérisé en ce que**
les modèles des unités en collaboration (CAU1-CAUN) sont présentés sur la base de réseaux pétris de haut niveau (HLPN) ou de réseaux pétris colorés élargis (KOLPN).

3. Procédé selon la revendication 1 ou 2,
**caractérisé en ce que**
des modèles (M1-MN) d'unités en collaboration (CAU1-CAUN) sont fournis sur le fondement de composants (HW1-HWN) avec des degrés de finesse différents comme par exemple un module d'une machine, une partie de machine, un capteur, un actionneur ou un élément périphérique.

4. Procédé selon les revendications précédentes,
**caractérisé en ce qu'**
on fournit des modèles (M1-MN) d'unités en collaboration (CAU1-CAUN) sur le fondement de composants réemployables (HW1-HWN).

5. Procédé selon les revendications précédentes,
**caractérisé en ce que**
comme procédé de simulation, on utilise un procédé de simulation discret orienté selon les évènements et/ou un procédé de validation et/ou d'analyse fondé sur une analyse fonctionnelle.

6. Procédé selon les revendications précédentes,
**caractérisé en ce que**
le catalogue (K) de modèles standardisés (M1-MN) contient des unités en collaboration (CAU1-CAUN).

7. Procédé selon les revendications précédentes,
**caractérisé en ce que**
le catalogue (K) contient des modèles (M1-MN) d'unités en collaboration (CAU1-CAUN) pour des scénarios de produits différents.

8. Procédé selon les revendications précédentes,
**caractérisé en ce que**
dans l'unité de programme (ASE1-ASEN) fondée sur un agent, déduit des modèles (M1-MN) des unités en collaboration (CAU1-CAUN), on implémente des fonctions principales telles que la commande, la surveillance, le diagnostic des procédés de décision, des procédures d'entretien prévisionnelles et correctives.
